(19)

Europäisches
Patentamt
European
Patent Office
Office européen
des brevets

(11)  **EP 1 576 747 B1**

(12)  **EUROPEAN PATENT SPECIFICATION**

(45) Date of publication and mention
of the grant of the patent:
**13.06.2007   Bulletin 2007/24**

(51) Int Cl.:
***H04B 10/18*** *(2006.01)*

(21) Application number: **02808266.7**

(22) Date of filing: **23.12.2002**

(86) International application number:
**PCT/EP2002/014730**

(87) International publication number:
**WO 2004/057779 (08.07.2004 Gazette 2004/28)**

(54) **OPTICAL TRANSMISSION SYSTEM USING AN OPTICAL PHASE CONJUGATION DEVICE**

OPTISCHES ÜBERTRAGUNGSSYSTEM UNTER VERWENDUNG EINER VORRICHTUNG FÜR OPTISCHE PHASENKONJUGATION

SYSTEME DE TRANSMISSION OPTIQUE METTANT EN OEUVRE UN DISPOSITIF DE CONJUGAISON DE PHASE OPTIQUE

(84) Designated Contracting States:
**AT BE BG CH CY CZ DE DK EE ES FI FR GB GR IE IT LI LU MC NL PT SE SI SK TR**

(43) Date of publication of application:
**21.09.2005   Bulletin 2005/38**

(73) Proprietor: **Pirelli & C. S.p.A.**
**20123 Milano (IT)**

(72) Inventors:
• **MINZIONI, Paolo**
**I-20126 Milano (IT)**

• **ALBERTI, Francesco**
**I-20126 Milano (IT)**
• **SCHIFFINI, Alessandro**
**I-20126 Milano (IT)**

(74) Representative: **Battipede, Francesco**
**Pirelli & C. S.p.A.**
**Viale Sarca, 222**
**20126 Milan (IT)**

(56) References cited:
**WO-A-99/05805**          **US-B1- 6 175 435**

**Description**

The present invention relates to an optical transmission system using an optical phase conjugation device.

Long-distance optical transmission systems have been constructed by using erbium-doped fiber amplifiers (EDFAs) as in-line optical repeaters. Signal attenuation due to fiber loss is periodically compensated for by the optical amplifier gain to overcome the limitation of transmission distance. Since, in such systems, signal power is maintained at a high level along the entire system length owing to the periodic amplification, the dependence of fiber refractive index on optical power can no longer be ignored. This nonlinear effect, called the Kerr effect, leads to the self-phase modulation (SPM) of optical pulses, which in turn interplays with the group-velocity dispersion (GVD), or chromatic dispersion, in the fiber, causing nonlinear waveform distortion. In order to realize long-distance (e.g. 1000-2000 km or more) signal transmission at high data transmission rate (e.g. 40 Gbit/s or more) this waveform distortion must be counteracted.

Optical phase conjugation (OPC) is a known technique for chromatic dispersion compensation. Details may be found in G.P. Agrawal, "Fiber-Optic Communication Systems", A Wiley Interscience Publication, (1997), at paragraph 9.7. As explained by Agrawal, under certain conditions, OPC can compensate simultaneously for both GVD and SPM. Pulse propagation in a lossy optical fiber is governed by the Non-Linear Schrödinger Equation (NLSE)

$$\frac{\partial A}{\partial z} + \frac{i}{2}\beta_2\frac{\partial^2 A}{\partial t^2} = i\bar{\gamma}\left|A^2\right|A - \frac{1}{2}\alpha A \qquad [1]$$

where $A=A(z, t)$ represents a slowly varying amplitude of a pulse .envelope, $\beta_2$ is the GVD coefficient of the optical fiber, related to the dispersion parameter $D$ by the following relation

$$D = -\frac{2\pi c}{\lambda^2}\beta_2 \qquad [2]$$

$\bar{\gamma}$ is the nonlinear coefficient of the optical fiber, i.e. governs the SPM, and $\alpha$ accounts for the fiber loss. When $\alpha = 0$ (loss less case), $A^*$ satisfies the same equation when one takes the complex conjugate of eq.[1] and changes $z$ to $-z$. As a result, midspan OPC can compensate for SPM and GVD simultaneously. Clearly, such case is immaterial, as fiber losses cannot be practically avoided.

In order to study the impact of the fiber loss, the following substitution may be made

$$A(z,t) = B(z,t)\exp(-\alpha z/2) \qquad [3]$$

so that eq.[1] can be written as

$$\frac{\partial B}{\partial z} + \frac{i}{2}\beta_2\frac{\partial^2 B}{\partial t^2} = i\gamma z\left|B\right|^2 B \qquad [4]$$

where $\gamma(z) = \bar{\gamma}\exp(-\alpha z)$. By taking the complex conjugate of eq.[4] and changing $z$ to $-z$, it can be seen that perfect SPM compensation can occur only if $\gamma(z) = \gamma(L - z)$, where $L$ is the total system length. This condition cannot be satisfied for $\alpha \neq 0$.

One may think that the problem can be solved by amplifying the signal after midspan OPC such that the signal power becomes equal to the input power before the signal is launched in the second-half section of the fiber link. Although such an approach can reduce the impact of SPM, actually it does not lead to a satisfactory compensation of the SPM. Perfect SPM compensation can occur only if the power variations are symmetric around the midspan point where the OPC is performed so that $\gamma(z) = \gamma(L - z)$ in eq.[4]. In practice, signal transmission does not satisfy this property. One can come close to SPM compensation if the signal is amplified often enough that the power does not vary by a large amount during each amplification stage. This approach is, however, not practical since it requires closely spaced amplifiers.

S. Watanabe, in patent US 6,175,435, considers a phase conjugator disposed between a transmission line I (of length $L_1$) and a transmission line II (of length $L_2$). After a series of calculations, he obtains the following equations for GVD and SPM compensation:

$$D_1 L_1 = D_2 L_2 \qquad [5]$$

$$\gamma_1 \overline{P_1} L_1 = \gamma_2 \overline{P_2} L_2 \qquad [6]$$

where $\overline{P_1}$ and $\overline{P_2}$ denote the average powers in the transmission lines I and II, respectively. Also, $D_1$ and $\gamma_1$ denote the dispersion parameter and the nonlinear coefficient in the transmission line I, respectively; and $D_2$ and $\gamma_2$ denote the dispersion parameter and the nonlinear coefficient in the transmission line II, respectively. According to the patent, complete compensation can be realized by providing, at positions equivalently symmetrical with respect to the phase conjugator, the same ratio of the optical Kerr effect to the dispersion. An increase of this ratio along the transmission line can be attained by gradually decreasing the dispersion or gradually increasing the optical Kerr effect. It is possible to change the dispersion value by adequately designing the fiber. For example, the above ratio is changeable by changing the zero dispersion wavelength of a dispersion shift fiber (DSF) or by changing the relative refractive index between the core and the clad of the fiber or the core diameter thereof. Meanwhile, change of the optical Kerr effect can be achieved by changing the nonlinear refractive index of the light intensity. According to Watanabe, a suitable optical fiber can be manufactured by continuously changing at least one fiber parameter selected from the loss, nonlinear refractive index, mode field diameter and dispersion.

In Applicant's opinion, the use of such kinds of "special" fibers does not represent an optimal solution, as such fibers may be complex to manufacture. Further, such method does not apply to optical systems already installed, unless a substitution of all the fibers of the system is performed.

C. Lorattanasane et al., in "Design Theory of Long-Distance Optical Transmission Systems Using Midway Optical Phase Conjugation", Journal of Lightwave Technology, vol.15, no.6, pages 948-955 (1997), describe a design method for suppressing the residual waveform distortion due to periodic power variation in an optical amplifier chain and to dispersion value fluctuation from span to span along a midway optical phase conjugation system. According to the authors, the amplifier spacing must be short relative to the nonlinearity length and signal pulses must be transmitted within appropriate windows of fiber dispersion. Computer simulation results reported in the article show that short amplifier spacing (40-50 km) is required for long-distance systems, whereas, for short-distance systems less than 1000 km, the amplifier spacing as long as 100 km is possible.

In Applicant's opinion, an amplifier spacing as long as 100 km also for long distance systems, having a length higher than 1000 km, is preferred, in order to reduce the number of installed amplifiers.

French patent application no. 2,757,720, to Alcatel Alsthom, discloses an adaptation device having a compensation section connected to a spectral inverter. The inverter is connected to a transmission section formed by a plurality of segments of transmission fiber, subsequently coupled with each other by means of optical amplifiers. In order to realize a compensation section for correction of the chromatic dispersion and the non-linearities, segments of dispersive fiber associated to the transmission segments are coupled together. The optical parameters of the transmission segments and their input optical power are taken into account in order to dimension the compensation segments. The adaptation device is disposed as last stage of a transmission station and/or as first stage of a receiving section. In a disclosed example, an optical link of 1000 km made of 20 segments having equal length of 50 km is considered. The transmission fiber has a dispersion having a value of -0.22 ps/nm/km, an attenuation coefficient of 0.216 dB/km and a nonlinear coefficient of 2.5 $W^{-1} \cdot km^{-1}$. The pre-compensation fibers have an attenuation of 0.6 dB/km and a nonlinear coefficient of 18 $W^{-1} \cdot km^{-1}$. The input power in the transmission segments and in the pre-compensation segments are respectively 6.0 dBm and 7.0 dBm. The values of dispersion of the pre-compensation segments range from about -160 ps/nm/km to about -20 ps/nm/km and a total length of about 14 km of pre-compensation fiber is used in the adaptation device. According to the authors, in a simplified embodiment, a single segment of fiber can be used, having a length equal to the sum of the lengths of the pre-compensation segments and an average dispersion.

The Applicant observes that the solution disclosed in the FR '720 patent application can hardly be applied in an optical link using typical non-zero dispersion fibers for transmission, i.e. fibers having a dispersion higher than about 1.5 ps/nm/km in absolute value. In fact, at a higher dispersion of the transmission fiber would correspond a higher length of the pre-compensation segments. For example, with transmission fibers having a dispersion coefficient with a value ten times higher with respect to the exemplary value disclosed in the FR '720 patent application (i.e., -2.2 ps/nm/km), a total length of 140 km should be provided for the pre-compensation section, using the same pre-compensation fibers disclosed in the FR '270 patent application. This result is quite unpractical, due to the high additional attenuation that would be introduced by a so long pre-compensation section. Fibers having higher dispersion could in principle be used in the pre-compensation section. However, the level of dispersion reachable with currently available fibers is not unlimited, in particular when positive dispersion fibers are used. It has to be noticed that non-zero dispersion fibers having dispersion even higher than 3.5-4.0 ps/nm/km are currently employed in optical systems, in order to counteract the occurrence of detrimental nonlinear effects such as four-wave mixing in wavelength division multiplex optical systems.

WO patent application no. 99/05805, to British Telecommunications PLC, discloses a method for symmetrised mid-span spectral inversion (MSSI), where the high power regions in the optical communication system are symmetrised about the MSSI means. The amplifiers are positioned so as to have the high-power regions in the two sections of the transmission link symmetrical about the mid-point of the transmission network, where MSSI is performed. These high-power regions are the length of fiber immediately after the fiber amplifier which is substantially equal to the effective nonlinear length ($L_{eff}$) of the optical transmission link. The distance from the amplifier preceding the phase conjugator to the phase conjugator is $L_A$ and the distance from the phase conjugator to the subsequent amplifier is $L_B$. The distances $L_A$ and $L_B$ are given by

$$L_A = \frac{L_{amp} + L_{eff}}{2} \qquad L_B = \frac{L_{amp} - L_{eff}}{2} \qquad \qquad [7]$$

where $L_{amp} = L_A + L_B$ is the amplifier spacing. In an example, $L_{amp}$ is 80 km, $L_{eff}$ is 21.5 km, so that the MSSI equipment would be sited at a distance of $\approx$ 51 km from the preceding amplifier. With an odd number of spans, if it is not possible to place the MSSI equipment at a location other than an amplifier site, the author suggests to add a length of fiber $L_{amp}$ - $L_{eff}$ kilometers long immediately after the MSSI equipment at the amplifier location. Thus a length of fiber of 58.5 km would be added. With an even number of spans, the MSSI equipment is sited immediately upstream of the optical amplifier and a length of fiber $L_{eff}$ kilometers long is sited immediately upstream of the MSSI equipment. According to the author, it may be necessary to insert additional amplifiers to give the symmetrical positioning of the high-power regions or if the optical signal levels are sufficiently low so as to cause bit error rate degradation.

In Applicant's opinion, a positioning of the optical phase conjugator very far from an amplifier (e.g. about 50 km) has a drawback in that the optical line has to be provided with a dedicated site for the MSSI equipment, in addition to the amplifier sites. Even when lengths of fibers are added as suggested in the '805 patent application in order to place the MSSI equipment at an amplifier site, the necessity arises of providing additional amplifiers to take into account the long length of the added fiber (in particular with an odd number of spans). Such combination of long added fiber and additional amplifiers may, in turn, unbalance the power distribution along the line, so that nonlinearity compensation may be hindered.

The Applicant has understood that these problems may arise due to the fact that only symmetric dispositions in space, that is, in physical length of fiber, has been considered in '805 patent application for the high power regions with respect to the position of the OPC device. The Applicant has found that more advantageous system configurations for reducing nonlinearity exploiting an OPC device may be implemented by considering symmetrised dispositions of the high power regions with respect to the dispersion accumulated along the fiber path, rather than with respect to the fiber path itself.

More particularly, the Applicant has found that the effects of nonlinearity may be substantially reduced in a system comprising spans of transmission optical fiber separated by optical line amplifiers by connecting an optical phase conjugation upstream from an optical line amplifier. An optical fiber length having the same sign of dispersion of said transmission optical fiber and a higher dispersion coefficient, in absolute value, is connected upstream from the optical phase conjugation device: the optical fiber length introduces an additional accumulated dispersion nearly equal to the dispersion accumulated in an effective length $L_{eff}$ of transmission optical fiber. A further amplifier is also associated to the optical fiber length, in order to increase the optical signal power within the optical fiber length before phase conjugation. Advantageously, the optical phase conjugation device, the optical fiber length and the further optical amplifier may be disposed in the same site including the optical line amplifier.

In a first aspect, the invention relates to an optical system comprising:

- an optical fiber path suitable for propagating an optical signal at least in a first direction;
- a plurality M of optical line amplifiers, disposed along said optical fiber path, so as to divide said optical fiber path in N spans of optical fiber, said spans of optical fiber comprising at least one transmission optical fiber having an effective length $L_{eff}$; and
- an optical phase conjugation device associated to an amplifier of said plurality of amplifiers,

characterized in that it further comprises

- an optical fiber length disposed upstream from said optical phase conjugation device and a further optical amplifier associated to said optical fiber length, said optical fiber length having the same sign of dispersion of said transmission optical fiber and a higher dispersion coefficient, in absolute value, at a wavelength of said optical signal, said optical fiber length being adapted for introducing an accumulated dispersion comprised between 0.6 and 1.5 times a dispersion accumulated in an effective length $L_{eff}$ of said transmission optical fiber.

Preferably, said optical fiber length has an absolute value of dispersion coefficient higher than or equal to two times the dispersion coefficient of said transmission optical fiber. More preferably, said optical fiber length has an absolute value of dispersion coefficient higher than or equal to three times the dispersion coefficient of said transmission optical fiber.

Typically, said optical line amplifiers comprise erbium-doped fiber amplifiers.

In preferred embodiments, said further optical amplifier provides an output power higher than an average output power of said plurality of line amplifiers. Alternatively or in combination, an optical fiber length having a nonlinear coefficient higher than a nonlinear coefficient of said transmission optical fiber may be used.

Preferably, said optical fiber length is adapted for introducing an accumulated dispersion higher than or equal to 0.8 times the dispersion accumulated in an effective length $L_{eff}$ of said transmission optical fiber.

Preferably, said optical fiber length is adapted for introducing an accumulated dispersion lower than or equal to 1.2 times the dispersion accumulated in an effective length $L_{eff}$ of said transmission optical fiber.

In order to reduce occurrence of four-wave mixing in case of WDM transmission, the transmission optical fiber may have a dispersion higher than or equal to 0.5 ps/nm/km, in absolute value, at the signal wavelength.

Typically, the optical system according to the invention also comprises a transmitting station and a receiving station. The transmitting station is connected at an input end and the receiving station is connected to an output end of said optical fiber path.

In a second aspect, the invention relates to a method for assembling an optical system suitable for propagating an optical signal, comprising the steps of:

- providing a plurality M of optical line amplifiers;
- connecting said plurality of optical line amplifiers by N spans of optical fiber so as to form an optical fiber path, said spans of optical fiber comprising at least one transmission optical fiber having an effective length $L_{eff}$;
- associating a phase conjugation device to one of said optical line amplifiers;

characterized in that it further comprises the steps of

- connecting an optical fiber length upstream from said optical phase conjugation device, said optical fiber length having the same sign of dispersion of said transmission optical fiber and a higher dispersion coefficient, in absolute value, at a wavelength of said optical signal, said optical fiber length being adapted for introducing an accumulated dispersion comprised between 0.6 and 1.5 times a dispersion accumulated in an effective length $L_{eff}$ of said transmission optical fiber, and
- associating a further optical amplifier to said optical fiber length.

In a third aspect, the invention relates to a method of operating an optical transmission system comprising an optical fiber path including at least one transmission optical fiber having an effective length $L_{eff}$ and a plurality of optical line amplifiers disposed along said optical fiber path, said method comprising:

- inserting an optical signal at an input end of said optical fiber path;
- amplifying said optical signal along said fiber path by said plurality of optical line amplifiers;
- phase-conjugating said optical signal at one of said line amplifiers;

characterized in that it further comprises the steps of:

- before said step of phase-conjugating, inserting said optical signal at an input end of an optical fiber length having the same sign of dispersion of said transmission optical fiber and a higher dispersion coefficient, in absolute value, at a wavelength of said optical signal, said optical fiber length being adapted for introducing an accumulated dispersion comprised between 0.6 and 1.5 times a dispersion accumulated in an effective length $L_{eff}$ of said transmission optical fiber, and
- amplifying said optical signal in association with said optical fiber length.

In a fourth aspect, the invention relates to a method of upgrading an optical transmission system comprising an optical fiber path, the optical fiber path including at least one transmission optical fiber having an effective length $L_{eff}$ and a plurality of optical line amplifiers disposed along said optical fiber path, said method comprising:

- associating a phase conjugation device to one of said plurality of optical amplifiers;
- connecting an optical fiber length upstream from said phase conjugation device, said optical fiber length having the same sign of dispersion of said transmission optical fiber and a higher dispersion coefficient, in absolute value, at a wavelength of said optical signal, said optical fiber length being adapted for introducing an accumulated dispersion comprised between 0.6 and 1.5 times a dispersion accumulated in an effective length $L_{eff}$ of said transmission optical fiber;
- associating a further optical amplifier to said optical fiber length.

Further features and advantages of the present invention will be better illustrated by the following detailed description, herein given with reference to the enclosed drawings, in which:

- Figure 1 schematically shows an optical transmission system according to the invention;
- Figures 2a and 2b schematically show two power profiles that can be obtained along the optical fiber path of the system of fig. 1, respectively for a lumped erbium doped fiber amplifier and with a counter-propagating Raman pumping;
- Figures 3a and 3b show how the eye opening may worsen due to the onset of nonlinearity in a high power transmission system;
- Figure 4 schematically shows the power level in one span of a system using distributed counter-propagating Raman amplification;
- Figures 5a and 5b show plots of two parameters suitable for calculating the effective length $L_{eff}$ in case of use of distributed amplification;
- Figures 6a and 6b show plots of two functions, whose intersections may be used for calculating the effective length $L_{eff}$ in case of use of distributed amplification;
- Figure 7 shows a portion of a preferred embodiment of an optical system according to the present invention;
- Figures 8a and 8b schematically show plots of the optical power versus accumulated dispersion, respectively for a system according to the prior art and for a system according to the invention;
- Figure 9 shows regions of possible pairs length-dispersion coefficient of the added fiber suitable for obtaining a maximum eye opening penalty of 0.5 dB at the receiving end of an optical system according to the invention, obtained by the Applicant in a first series of simulations;
- Figure 10 shows regions of possible pairs length-dispersion coefficient of the added fiber suitable for obtaining a maximum eye opening penalty of 0.5 dB at the receiving end of an optical system according to the invention, obtained by the Applicant in a second series of simulations;
- Figures 11a-11b show eye diagrams of NRZ pulses obtained at the receiving end of, respectively, an optical system not including an OPC and of an optical system including an OPC, an added fiber length and a further amplifier according to the invention;
- Figures 12a-12b show eye diagrams of RZ pulses obtained at the receiving end of, respectively, an optical system not including an OPC and of an optical system including an OPC, an added fiber length and a further amplifier according to the invention
- Figure 13 shows a comparison between regions of possible pairs length-dispersion coefficient of the added fiber suitable for obtaining a maximum eye opening penalty of 0.5 dB at the receiving end of an optical system according to the invention and according to the prior art.

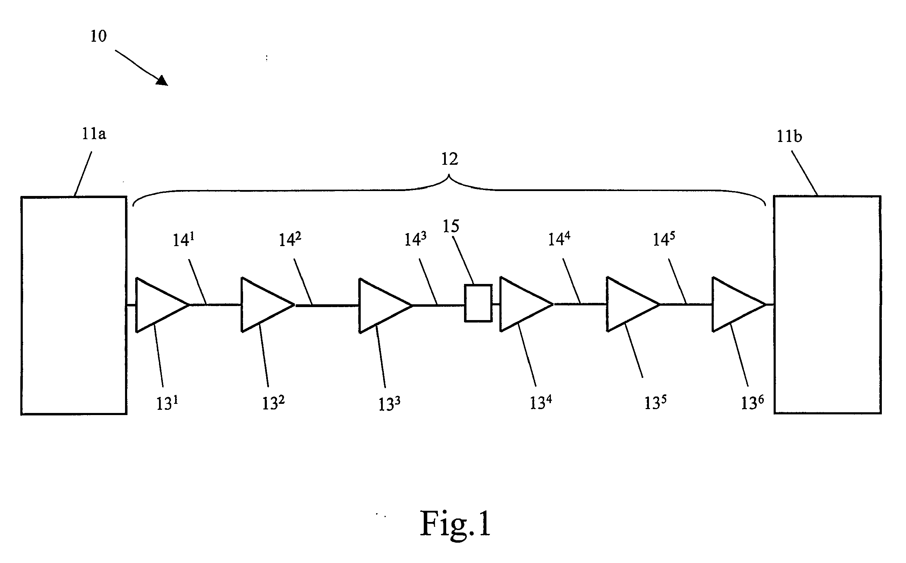

Fig.1 schematically shows an optical transmission system 10 according to the invention, comprising a transmitting station 11a, adapted to transmit optical signals over an optical fiber path 12, and a receiving station 11b, adapted to receive optical signals coming from the optical fiber path 12. The transmitting station 11a comprises at least one transmitter. The receiving station 11b comprises at least one receiver. For WDM transmission, stations 11a, 11b comprise a plurality of transmitters and receivers, for example twenty or thirty-two or sixty-four or one hundred transmitters and receivers. The transmission system may include transmitting and receiving stations and an optical fiber path to transmit signals in a direction opposite to that of optical fiber path 12. Terminal and line apparatuses operating in the two directions may share sites and facilities.

The transmitter or transmitters included in the transmitting station 11 a provide an optical signal to be coupled into the optical fiber path 12. The optical signal includes an information signal. Typically, each transmitter may comprise a laser source, adapted to emit a continuous wave optical signal having a predetermined wavelength, and an external optical modulator, for example a lithium niobate modulator, adapted to superimpose on the continuous wave optical signal emitted by the laser source the information signal at a predetermined high frequency or bit rate, such as for example 10 Gbit/s or 40 Gbit/s. Alternatively, the laser source may be directly modulated with the information signal. A preferred wavelength range for the optical signal radiation is between about 1460 nm and about 1650 nm. A more preferred wavelength range for the optical signal radiation is between about 1520 nm and about 1630 nm. Optical signals may be of the return-to-zero (RZ) format or non-return-to-zero (NRZ) format. Typically, in case of WDM transmission each transmitter may also comprise a variable optical attenuator, adapted to set a predetermined power level for each signal wavelength (pre-emphasis level). In case of WDM transmission, the different signal wavelengths emitted by the plurality of transmitters are multiplexed by a suitable multiplexing device on the optical fiber path 12. Such multiplexing device can be of any kind, such as a fused fiber or planar optics coupler, a Mach-Zehnder device, an AWG (Arrayed Waveguide Grating), an interferential filter, a micro-optics filter and the like. Combinations of multiplexing devices can also be used.

Each receiver is adapted to convert an incoming optical signal in an electrical signal. Typically, this task may be provided by a photodetector. The receiver may also extract the information signal from the received electrical signal. For a WDM transmission, a plurality of photodetectors is provided. A demultiplexing device allows to separate the different signal wavelengths from a single optical path to a plurality of optical paths, each terminating with a receiver. The demultiplexing device can be of any kind, such as a fused fiber or planar optics coupler, a Mach-Zehnder device, an AWG (Arrayed Waveguide Grating), an interferential filter, a micro-optics filter and the like. Combination of demultiplexing devices can also be used.

The optical fiber path 12 comprises at least one transmission optical fiber. For the purposes of the present invention, by "transmission optical fiber" it has to be intended a fiber adapted for transport of optical signals between points located at a significant distance from each other (e.g., several tenths of km), with relatively low attenuation (e.g., lower than 0.3 dB/km). The transmission optical fiber used in the optical fiber path 12 is a single mode fiber. For example, it can be a standard single mode optical fiber (SMF), having chromatic dispersion between approximately +16 ps/(nm·km) and +20 ps/(nm·km) at a wavelength of 1550 nm, or a dispersion-shifted fiber (DSF), having a dispersion approaching zero at a wavelength of 1550 nm, or a non-zero dispersion fiber (NZD), with dispersion of between approximately 0.5 ps/(nm·km) and 4 ps/(nm·km), in absolute value, at a wavelength of 1550 nm, or a fiber of the half-dispersion-shifted type (HDS) having a positive dispersion which is intermediate between that of an NZD type fiber and a standard single-mode fiber. In order to reduce the occurrence of four-wave-mixing (FWM), the optical transmission fiber or fibers included in the optical fiber path 12 may preferably have a dispersion which is higher than or equal to approximately 0.5 ps/(nm·km), more preferably higher than or equal to 1 ps/(nm·km), even more preferably higher than or equal to 1.5 ps/(nm·km), in absolute value, at the signal wavelength. Preferably, if the optical signals are of the RZ format, a transmission fiber having a chromatic dispersion higher than 15 ps/(nm·km), in absolute value, at the signal wavelength may be used, for example a SMF fiber. Preferably, if the optical signals are of the NRZ format, a transmission fiber having a negative chromatic dispersion lower than 10 ps/(nm-km), in absolute value, at the signal wavelength may be used.

A plurality of M optical line amplifiers is disposed along the optical fiber path 12, so as to divide the optical fiber path 12 in a plurality of fiber spans. In fig.1 six optical line amplifiers $13^1$, $13^2$..., $13^6$ are disposed along the optical fiber path 12, so that five fiber spans $14^1$, $14^2$..., $14^5$ may be identified. Typically the optical line amplifiers are included in suitable amplification sites along the optical path.

For example, an optical line amplifier suitable to be used in the system according to the present invention is an erbium doped fiber amplifier (EDFA), comprising at least one pump source suitable for providing an optical pumping radiation, at least one erbium doped fiber and at least one coupler device suitable for coupling the pumping radiation and an optical signal to be amplified into the erbium doped fiber or fibers, e.g. a WDM coupler. Suitable pumping radiation may preferably have a wavelength in a range around 1480 nm or in a range around 980 nm.

Another exemplary optical line amplifier suitable to be used in the system according to the present invention is a semiconductor amplifier, comprising an electrical pump source suitable for providing electrical power and a semiconductor optical amplifying element comprising an electrode structure adapted for connection to the electrical pump source.

A further example of optical line amplifier suitable to be used in a system according to the present invention is a lumped Raman amplifier, comprising at least one pump source adapted for providing an optical pumping radiation having a power and a wavelength suitable for causing Raman amplification in a piece of optical fiber especially adapted for obtaining high Raman amplification in a length of several km (Raman fiber), typically having a low effective area, included in the optical line amplifier, and at least one coupler device suitable for coupling such pumping radiation into the Raman fiber, e.g. a WDM coupler. In order to have Raman amplification, the wavelength of the pumping radiation should be shifted with respect to the wavelength of the signal radiation in a lower wavelength region of the spectrum, such shift being substantially equal to the Raman shift (see G.P. Agrawal, "Nonlinear Fiber Optics", Academic Press Inc. (1995), pag.317-319) of the material comprised in the core of the Raman fiber. For typical silica/germania-based fibers the Raman shift is equal to about 13.2 THz. For signal wavelengths around 1550 nm, pumping radiation wavelengths suitable for Raman amplification may have a wavelength around 1450 nm. As an example, a fiber suitable for a lumped Raman line amplifier is disclosed in the article: T. Tsuzaki et al., "Broadband Discrete Fiber Raman Amplifier with High Differential Gain Operating Over 1.65 μm-band", OFC2001, MA3-1.

A further example of optical line amplifier suitable to be used in a system according to the present invention is an optical gain module comprising at least one pump source adapted for providing an optical pumping radiation having a power and a wavelength suitable for causing distributed Raman amplification in at least a portion of the optical fiber path 12, and at least one coupler device suitable for coupling such pumping radiation into the optical fiber path 12, e.g. a WDM coupler. In order to have Raman amplification, the wavelength of the pumping radiation should be shifted with respect to the wavelength of the signal radiation in a lower wavelength region of the spectrum, such shift being substantially equal to the Raman shift. Preferably, the pumping radiation is coupled into the optical fiber path 12 in a direction opposite to the direction of the optical signal (counter-propagating Raman amplification).

N fiber spans $14^1$, $14^2$..., $14^N$ are identified between the transmitting station 11a and the receiving station 11 b as the portions of optical fiber path 12 lying between the M optical line amplifiers $13^1$, $13^2$... $13^M$. If the last optical line amplifier disposed along the optical fiber path 12 is disposed immediately upstream from the receiving station 11b, for setting the power of the optical signal to a suitable level before the introduction in the receiving station 11b, the number M of optical line amplifiers is higher than the number N of the spans by a unity (M=N+1). If a span of fiber is placed between the last optical line amplifier and the receiving station 11b, it holds M=N. Preferably, the optical fiber path 12 comprises an odd number of fiber spans N.

Further to the transmission optical fiber, the spans $14^1$, $14^2$..., $14^N$ may comprise compensators, such as for example lengths of dispersion compensating fibers and/or dispersion compensating gratings, in order to provide a partial or a total compensation of chromatic dispersion of the optical signal, along the optical line and/or upstream from the receiving station 11b. Alternatively or in addition, a pre-compensator may be provided at the transmitting station 11a.

Preferably, the length of each span is greater than or equal to 40 km, more preferably greater than or equal to 80 km. Shorter span lengths may be provided, in particular, in long-haul systems, i.e. systems having an overall length exceeding several thousands of km, e.g. 10.000 km, in which the onset of nonlinear effects may sum up along the optical fiber path, up to high levels. On the other hand, greater span lengths in excess of 80 km are desirable for systems having an overall length of no more than 2-3000 km, in which the onset of nonlinear effects may occur due to an increase of the overall optical power of the signal sent on the optical fiber path (for example due to an increase of the number of signal wavelengths provided in a WDM system) and/or of the bit rate of the system.

Preferably, the optical line amplifiers $13^1$... $13^M$ are disposed substantially periodically along the optical fiber path 12, that is, the length of the fiber spans $14^1$...$14^N$ is substantially the same. Practically, this may correspond to a variation of the length of the spans in the system of at most 10%, preferably 5%, of the average length of the spans. More particularly, a lower variation may be desirable for systems having, for example, overall length in excess of 1500 km, and/or using a bit rate of 40 Gbit/s or more, and/or using a high number of channels.

An optical phase conjugation (OPC) device 15 is disposed along the optical fiber path 12, associated to one of the optical line amplifiers $13^4$. The OPC device 15 may be connected upstream or downstream from the optical line amplifier. The OPC device 15 may be a device capable of inverting the spectrum of the channels transmitted along the line, i.e. a device for spectral inversion. Additionally, such device may modify the central wavelength of the inverted channels. Preferably, the OPC device 15 is a polarization-independent device, i.e. a device having a maximum variation of 1 dB of the power of the obtained phase conjugate signal versus a variation of the polarization state of an incoming optical signal. Preferably, it comprises a non-linear medium through which the optical channels and at least one linearly polarized pumping radiation pass twice, in one direction on the first pass and in the opposite direction on the second pass. On the second pass, the optical channels pass through the non-linear medium after undergoing a rotation of $\pi/2$ of their polarization state. An example of a device of this type is described in the article by C.R. Giles, V. Mizrahi and T. Erdogan, "Polarization-Independent Phase Conjugation in a Reflective Optical Mixer", IEEE Photonics Technology Letters, Vol. 7, No. 1, pp. 126-8 (1995). Another example of a device of this type is disclosed in EP patent application no.987,583. Typically, the OPC device 15 can comprise one or more devices for filtering the residual wavelengths of the non-linear phase conjugation process. Additionally, the OPC device can comprise one or more devices for amplification of the phase conjugated channels or, in general, for total or partial compensation of the attenuation of the phase conjugator. In order to perform the phase conjugation of many different channels, a multi-channel OPC device of the type described in patent US 5,365,362 may be used. The disposition of the OPC device immediately upstream from the optical line amplifier will be discussed in great detail in the following.

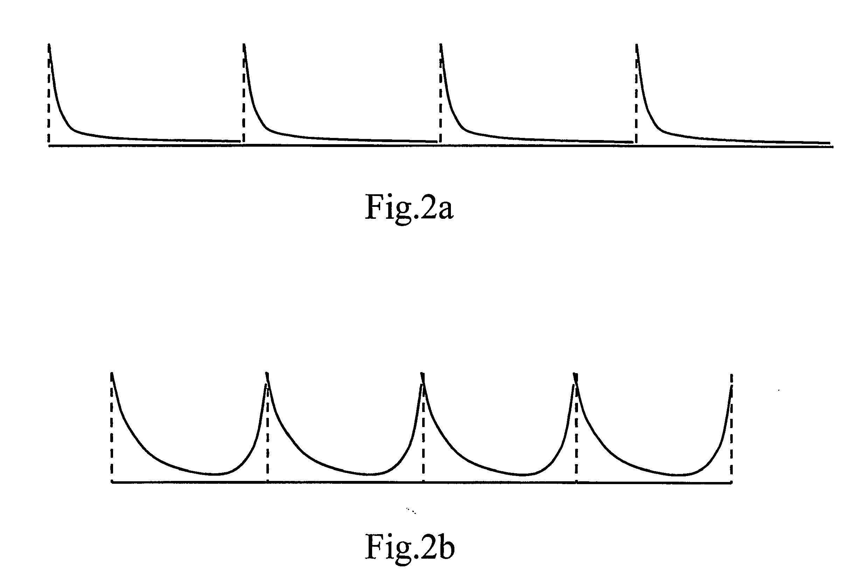

At the output of each optical line amplifier, the power of the optical signal is increased to a level determined by the optical gain provided by the amplifying medium used by the optical line amplifier. Figs.2a and 2b schematically show two optical power profiles that can be obtained along a portion of the optical fiber path 12 of the system of fig.1, respectively with a chain of lumped amplifiers (e.g. EDFAs) and with a chain of optical gain modules for distributed counter-propagating Raman amplification: the position of the optical line amplifiers is shown by the dashed vertical lines. For the purposes of the present invention, the terms "optical line amplifier" also include optical gain modules for distributed Raman amplification. In fig.2a it is shown that the power increases abruptly in a very small length, corresponding to the overall length of the lumped amplifier (e.g. few meters for an EDFA, few millimeters or even less in a semiconductor amplifier, some km for a lumped Raman amplifier), and then diminishes progressively due to the attenuation introduced by the optical fiber included in the span downstream from the gain module, up to the next optical line amplifier, in which the power increases abruptly another time, and so on. In fig.2b it is shown that the power increases progressively approaching the optical gain module providing light for Raman amplification, due to counter-propagating Raman amplification, up to a maximum corresponding to the position of the optical gain module, then diminishes progressively due to the attenuation introduced by the optical fiber included in the span downstream from the gain module in a first portion, then increases approaching the next optical gain module, and so on. A figure similar to fig.2b would be obtained considering a mixed counter-propagating Raman+EDFA amplification, in which the power value reached upstream from the optical gain module is lower than the maximum power, that is given by EDFA amplification. In any case, as schematically shown by figs.2a-2b the power profiles upstream and downstream from the optical gain modules are typically not symmetrical with respect to the optical gain modules. For example, the Applicant has determined that with counter-propagating Raman amplification in typical transmission fibers, the absolute value of the slope of the increase of the power level due to Raman amplification in the last portion of the spans may be typically three times the absolute value of the slope of the decrease of the power level due to fiber attenuation in the first portion of the spans.

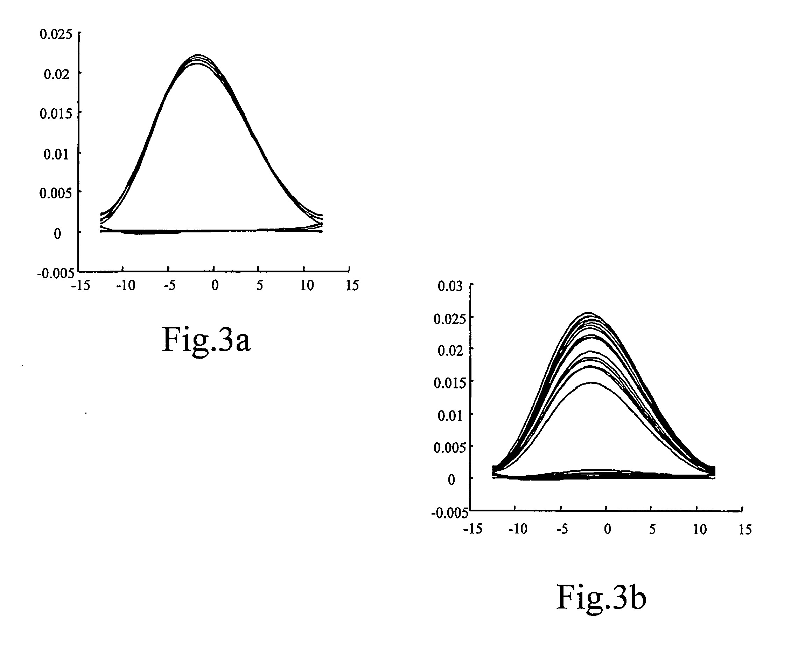

The maximum level of optical power along the optical fiber path, that is the height of the peaks in figs.2a-2b, depends on many factors. Typically, it depends on the optical gain introduced by the optical line amplifiers: such optical gain may be for example regulated as a function of the overall length of the system, and/or of the span lengths, and/or of the number of the channels in a WDM system. A system having higher bit rate may reach higher power level along the optical fiber path with respect to a system having lower bit rate, as the available time slot for each bit of information is lower. Today there is a great interest in increasing the bit rate of optical systems from values of about 2.5 Gbit/s or 10 Gbit/s to higher values such as 40 Gbit/s or more. An increase of the bit rate may cause a corresponding increase of the impact of nonlinear effects, as the reached power levels along the line may be very high. As an example, figures 3a and 3b show the result of two simulations made by considering the launch of a single optical channel at 40 Gbit/s having an average power of 10 dBm in a system having a length of 400 km and with perfect compensation of chromatic dispersion. In fig.3a nonlinear effects were canceled by setting to zero the nonlinear coefficient of the fiber. In fig.3b a nonlinear coefficient of 1.3 1/(W·km) was introduced. As it can be seen, the eye opening is much lower in fig.3b, even in a system having a relatively low length, due to the onset of nonlinear effects. It has to be noticed that the value of 10 dBm of average power of the optical channel was chosen only for simulation purposes: it has to be intended that the invention applies also to systems using lower average power signals.

In order to locate the portions of optical fiber path in which the power level of the optical signal reaches high values, the effective length $L_{eff}$ may be used:

$$L_{eff} = \frac{1 - e^{-\alpha L_{amp}}}{\alpha} \qquad [8]$$

where $L_{amp}$ is the average span length and $\alpha$ is the attenuation coefficient of the transmission fiber at the signal wavelength, expressed in Nepers·km$^{-1}$, instead of dB/km: the attenuation in Nepers·km$^{-1}$ may be obtained by multiplying the attenuation expressed in dB/km by a factor $\log_e(10)/10$. For the purposes of the present invention, the effective length calculated with formula [8] may be approximated to:

$$L_{eff} = \frac{1}{\alpha} \qquad [9]$$

as the exponential value at the numerator of formula [8] is close to zero for typical values of attenuation and span length.

In practice, the effective length calculated with formula [9] results to be about 20 km for typical transmission fibers having an attenuation coefficient of 0.2 dB/km. The effective length calculated with formulas [8] or [9] may be roughly used as a measure of the portion of fiber span in which the power level of the optical signal reaches values that can cause nonlinearity to be detrimental for correct transmission. In other words, in a portion of fiber span downstream from the output of an optical line amplifier at a distance greater than one effective length one can say that nonlinear effects do not play a substantial role, so that the distortion of the signal in that span portion may be substantially due only to linear effects, such as chromatic dispersion. More precisely, the effective length $L_{eff}$ calculated with formula [8] mathematically identifies the points along the line in which the power goes below $\dfrac{1}{e}$ of the maximum optical power, if only lumped amplification is used. Furthermore, according to the Applicant the effective length can be used as a measure of the asymmetry of the optical power distribution along the optical line: the higher the effective, the higher the asymmetry.

If distributed counter-propagating Raman amplification is used (in alternative or in combination with lumped amplification) the asymmetry of the optical power distribution is reduced. In order to calculate the effective length, the points of the optical spans in which the power level crosses a level of $\dfrac{1}{e}$ of the maximum optical power are considered.

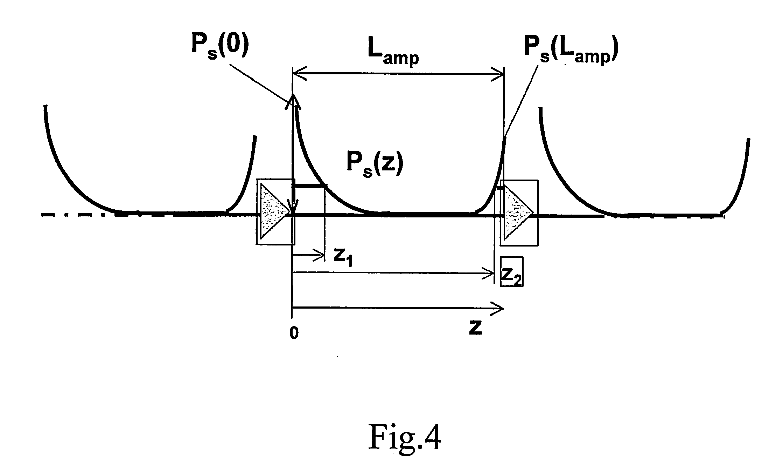

In this case, such points may be two, as the power decreases in a first portion of the span due to fiber attenuation, and then increases in a last portion of the span due to Raman amplification (see fig.4). Let $z_1$ and $z_2$ be such two points. We define the effective length in this case as:

$$L_{eff} = z_1 - (L_{amp} - z_2) \qquad [10]$$

where $L_{amp}$ is the average span length. The above definition for $L_{eff}$ is specific for each span. In practice, the average over all the spans can be considered as the effective length $L_{eff}$ for the optical fiber path or for the optical system.

If only counter-propagating Raman amplification is used, the power level at the output of the fiber span $P_s(L_{amp})$ is equal to the power level at the input of the fiber span $P_s(0)$. If counter-propagating Raman amplification is used in combination with lumped amplification, the power level at the output of the fiber span $P_s(L_{amp})$ is lower than the power level at the input of the fiber span $P_s(0)$, as lumped amplification introduces an amount of additional optical gain. The following expression may be used in order to describe the optical power along the span:

$$P_s(z) = P_s(0) \cdot e^{-\alpha_s z} \cdot \exp\left[ \frac{g_R \cdot P_P(L_{amp})}{\alpha_P \cdot A_{eff}} \cdot e^{-\alpha_P L_{amp}} \cdot \left(e^{\alpha_P z} - 1\right) \right] \qquad [11]$$

where $\alpha_s$ and $\alpha_P$ are the attenuation coefficients (in Nepers/km), respectively at the signal wavelength and at the Raman pump wavelength, $g_R$ is the Raman gain coefficient and $A_{eff}$ the effective area of the transmission fiber included in the span, whereas $P_P(L_{amp})$ is the Raman pump power introduced in the transmission fiber at the output end of the span.

$P_P(L_{amp})$ may be calculated by evaluating formula [11] at the output of the span (that is, by putting $P_s(z) = P_s(L_{amp})$ and solving with respect to $P_P(L_{amp})$), so that:

$$P_P(L_{amp}) = \frac{\alpha_P \cdot A_{eff}}{g_R \cdot \left(1 - e^{-\alpha_P L_{amp}}\right)} \cdot \ln\left( \frac{P_S(L_{amp})}{P_S(0)} \cdot e^{\alpha_s L_{amp}} \right) \qquad [12]$$

Formula [12] may be substituted into formula [11] so as to obtain:

$$P_s(z) = P_s(0) \cdot e^{-\alpha_s z} \cdot \exp\left[ \frac{1}{\left(1 - e^{-\alpha_P L_{amp}}\right)} \cdot \ln\left( \frac{P_S(L_{amp})}{P_S(0)} \cdot e^{\alpha_s L_{amp}} \right) \cdot e^{-\alpha_P L_{amp}} \cdot \left(e^{\alpha_P z} - 1\right) \right] \qquad [13]$$

Thus, in order to find the points $z_1$, $z_2$ of the optical spans in which the power level goes below $\dfrac{1}{e}$ of the maximum optical power $P_s(0)$, the following equation should be solved:

$$P_s(0) \cdot e^{-\alpha_s z} \cdot \exp\left[ \frac{1}{\left(1 - e^{-\alpha_P L_{amp}}\right)} \cdot \ln\left(K \cdot e^{\alpha_s L_{amp}}\right) \cdot e^{-\alpha_P L_{amp}} \cdot \left(e^{\alpha_P z} - 1\right) \right] = \frac{1}{e} \cdot P_s(0) \qquad [14]$$

where $K$ is the ratio between $P_s(L_{amp})$ and $P_s(0)$ (expressed in Watt). Equation [14] may be numerically solved in order to find the solutions $z_1$ and $z_2$.

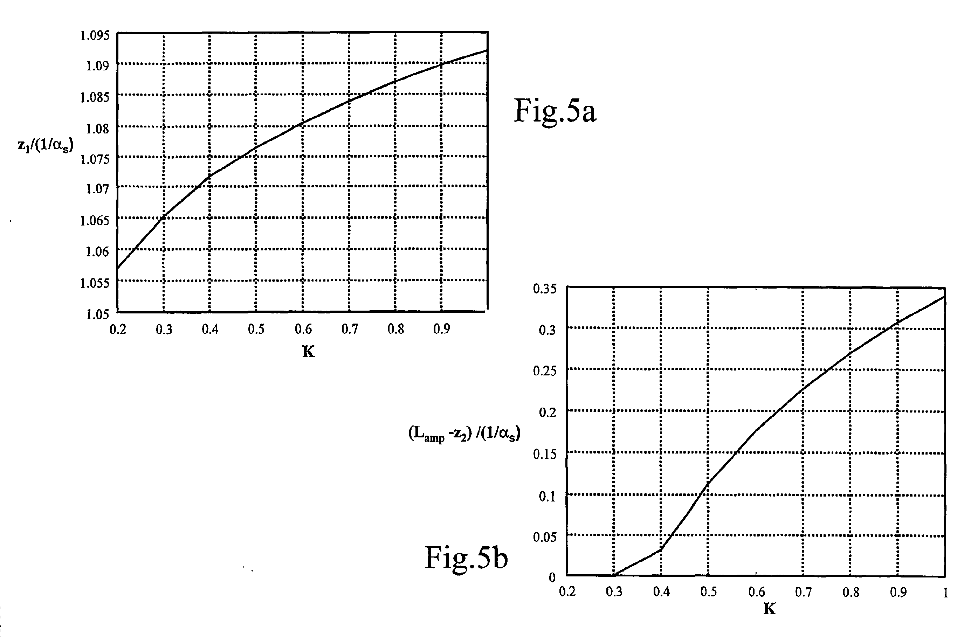

It may be convenient to express $z_1$ and $(L_{amp} - z_2)$ as multiple values of the approximated effective length with lumped amplification $(L_{eff})^{lumped} = 1/\alpha_s$. Fig.5a and fig.5b show, respectively, the variation of $z_1$ and $(L_{amp} - z_2)$ versus the $K$ parameter, for an amplifier spacing $L_{amp}$ of 100 km and $\alpha_s = \alpha_P = 0.2$dB/km, both $z_1$ and $(L_{amp} - z_2)$ being expressed as multiple of $1/\alpha_s$. As it can be seen in fig.5a, the value of $z_1$ is always approximately equal to $1/\alpha_s$ for any value of the $K$ parameter (variation between 1.055 and 1.095 times $1/\alpha_s$). As it can be seen in fig.5b, the value of $(L_{amp} - z_2)$ varies versus the $K$ parameter: for example, when only counter-propagating Raman amplification is used ($K$=1), it holds

$$L_{amp} - z_2 \cong 0.33 \frac{1}{\alpha_s} \cong \frac{1}{3} \frac{1}{\alpha_s}$$

so that, in such case, the effective length calculated with formula [10] becomes:

$$L_{eff} = z_1 - (L_{amp} - z_2) \cong \frac{1}{\alpha_s} - \frac{1}{3} \frac{1}{\alpha_s} = \frac{2}{3} \frac{1}{\alpha_s} \qquad [10']$$

As it can be seen, the introduction of the counter-propagating amplification reduces the value of the effective length.

If lumped amplification and counter-propagating distributed Raman amplification are used together, the effective length may become more similar to $1/\alpha_s$. In fact, by considering for example $K$=0.5, it holds (see fig.5b):

$$L_{eff} = z_1 - (L_{amp} - z_2) \cong \frac{1}{\alpha_s} - 0.11 \frac{1}{\alpha_s} \cong \frac{1}{\alpha_s} - \frac{1}{9} \frac{1}{\alpha_s} = \frac{8}{9} \frac{1}{\alpha_s}$$

Equation [14] may be solved graphically. By putting, for simplicity, $\alpha = \alpha_s = \alpha_P$ (for a standard SMF fiber it holds $\alpha_s = 0.046$ Neper/km @ 1550nm, $\alpha_P = 0.064$ Neper/km @ 1450nm), equation [14] may be written as

$$e^{-\alpha z} \cdot \exp\left[C \cdot \left(e^{\alpha z} - 1\right)\right] = e^{-1} \qquad [15]$$

wherein

$$C = \frac{1}{\left(1 - e^{-\alpha L_{amp}}\right)} \cdot \ln\left(K \cdot e^{\alpha L_{amp}}\right) \cdot e^{-\alpha L_{amp}}$$

By setting

$$y_1 = e^{\alpha z}$$

$$y_2 = \frac{\alpha}{C} \cdot z + 1 - \frac{1}{C}$$

the solutions to equation [15], that is, the points $z_1$ and $z_2$, may be found as the abscissa of the intersections between the functions $y_1(z)$ and $y_2(z)$, which may depend on the chosen values of $L_{amp}$ and $K$. In particular, when the span length $L_{amp}$ becomes lower than about 50-60 km, the use of counter-propagating Raman amplification may cause the optical power level to stay always over $\dfrac{P_s(0)}{e}$ along the whole span: in such case the effective length cannot be calculated.

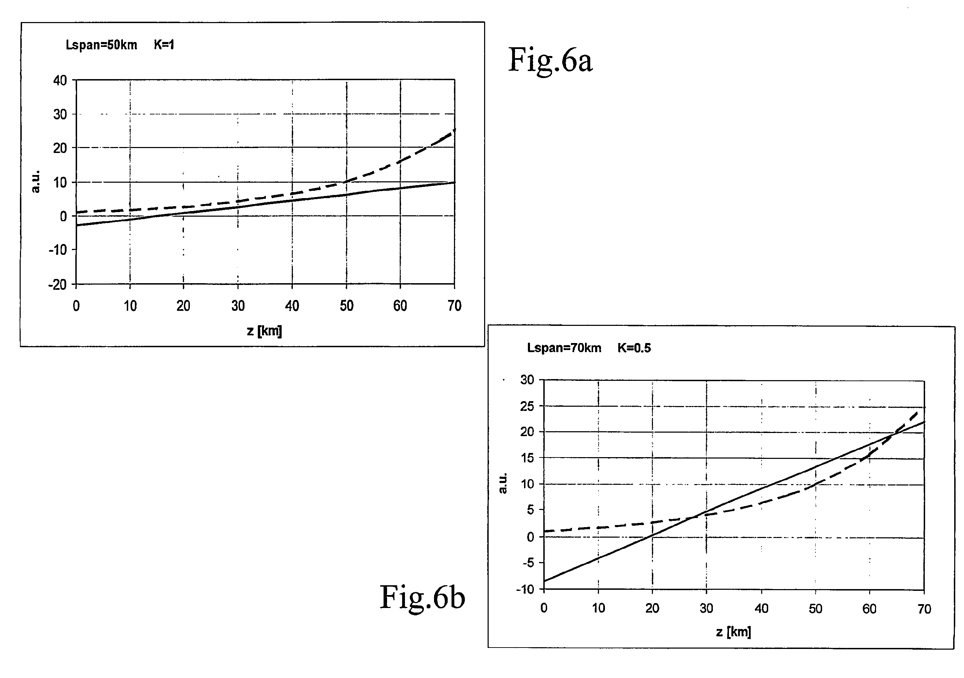

However, this would be substantially similar to a "lossless" system. For example, fig.6a shows the plots of the two functions $y_1(z)$ (dashed line) and $y_2(z)$ (continuous line) versus z for $K$=1 and $L_{amp}$=50 km. As it can be seen, the two functions never intersect with each other, so that no solution can be found to equation [15]. On the contrary, fig.6b shows the plots of the two functions $y_1(z)$ (dashed line) and $y_2(z)$ (continuous line) versus z for $K$=0.5 and $L_{amp}$=70 km: as it can be seen, two intersections can still be found ($z_1\cong27$ km, $z_2\cong65$ km), leading to $L_{eff}\cong22$ km. A plot similar to fig.6b (not shown) would be obtained for $K$=1 and $L_{amp}$=70 km, with intersections at $z_1\cong30$ km, $z_2\cong55$ km, leading to $L_{eff}\cong15$ km.

It is known that the inclusion of an OPC 15 in an optical system may reduce the negative effects produced on the optical signal by nonlinearity. The OPC device positioning has been related in the prior art to the compensation of the chromatic dispersion, so that the OPC device was at the mid-span point of the system, in proximity of the amplifier closer to the mid-span point. However, the Applicant has found that relying only on such positioning may not guarantee a sufficient reduction of the impact of nonlinear effects in many cases, in particular for systems having high bit rate (e.g. 40 Gbit/s) and/or long span lengths. According to the Applicant, even if the positioning of the OPC device near the mid-span point of the system may reduce nonlinearity, as the high power regions are disposed roughly symmetrically with respect to the OPC device, the intrinsic asymmetry of the high-power regions may still cause high levels of penalty at the receiver. In particular this problem may arise with long average span lengths, i.e. in excess of two-three times the effective length, in which the power distribution along each span has a great excursion between very high power values (at the output of the line amplifiers) and very low power values (at the end of the spans), i.e. more than about 3 dB below the maximum power level.

The Applicant has found that such problem may be solved by coupling an optical fiber length having the same sign of dispersion of the transmission optical fiber and a higher dispersion coefficient $D$, in absolute value, upstream from the optical phase conjugation device 15. A further amplifier is also associated to the optical fiber length, in order to increase the optical signal power within the optical fiber length. The optical fiber length introduces an additional accumulated dispersion nearly equal to the dispersion accumulated in an effective length $L_{eff}$ of transmission optical fiber, more particularly comprised between about 0.6 and 1.5 times the dispersion accumulated in an effective length $L_{eff}$ of transmission optical fiber. Preferably, the additional accumulated dispersion is higher than or equal to 0.8 times the dispersion accumulated in an effective length $L_{eff}$ of transmission optical fiber. Preferably, the additional accumulated dispersion is lower than or equal to 1.2 times the dispersion accumulated in an effective length $L_{eff}$ of transmission optical fiber. For the purposes of the present invention, by "accumulated dispersion" it has to be intended the product (dispersion coefficient x physical length of fiber), the dispersion coefficient being evaluated at the signal wavelength and in absolute value. For WDM transmission, the average of the wavelength channels can be used for evaluating the dispersion coefficient. The small quantity of accumulated dispersion added by the optical fiber length 16 can be compensated linearly with a suitable dispersion compensator, for example at the end of the optical path 12.

The further optical amplifier associated to the optical fiber length can be any kind of lumped amplifier, for example an EDFA, or a semiconductor optical amplifier, or a lumped Raman amplifier. In the latter case, the optical fiber length itself may be used as optical gain medium for the generation of Raman amplification, if the added fiber is suitable for the purpose. In such case, an optical gain module can be connected to one end of the optical fiber length, comprising at least one pump source adapted for providing an optical pumping radiation having a power and a wavelength suitable for causing Raman amplification in at least a portion of the optical fiber length, and at least one coupler device suitable for coupling such pumping radiation into the optical fiber length, e.g. a WDM coupler. The gain module can be connected at the upstream end (for co-propagating Raman amplification within the optical fiber length), or the downstream end (for counter-propagating Raman amplification within the optical fiber length). For the purposes of the present invention, the association of the further optical amplifier to the added optical fiber length upstream from the OPC device may include the connection of an optical gain module to one end of the added optical fiber length, for causing Raman amplification in at least a portion of the added optical fiber length.

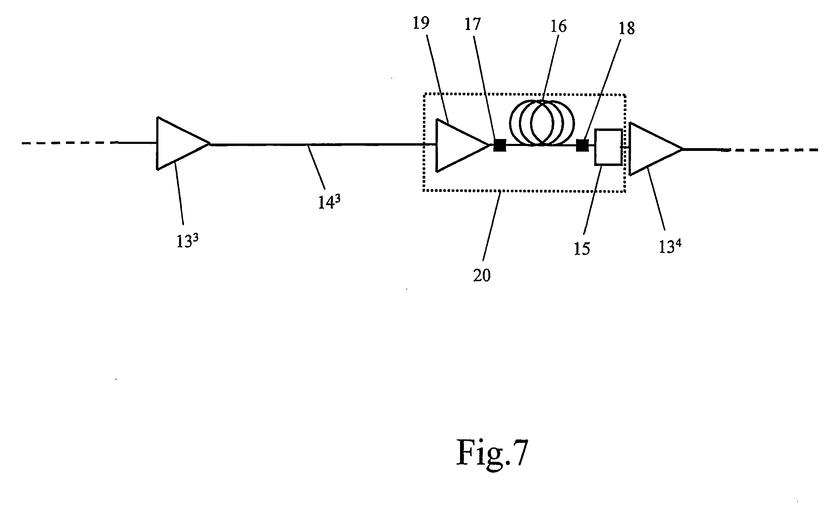

Fig.7 is a schematic enlargement of the portion of optical path 12 including the OPC device 15 of the system 10 in fig.1. In a preferred embodiment, the OPC device 15, the optical fiber length 16 and the further optical amplifier 19 are arranged immediately upstream from an optical line amplifier $13^4$ disposed along the optical line. More particularly, the OPC device 15 can be connected to the input of the optical line amplifier $13^4$, whereas the optical fiber length 16 is connected between the further optical amplifier 19 and the OPC device 15. The optical fiber length 16 may have a first end 17 connected to the output of the further optical amplifier 19 and a second end 18 connected to the OPC device 15. In an alternative configuration, not shown, the OPC device 15 may be connected immediately downstream from the optical line amplifier $13^4$, so that the optical fiber length 16 is connected between the output end of the further optical amplifier 19 and the input end of the optical line amplifier $13^4$. In such case, the output optical power exiting from the OPC device 15 should be substantially equal to the output power (or to the average of the output power) of the other optical line amplifiers. Advantageously, the optical phase conjugation device, the optical fiber length and the further optical amplifier may be disposed in the same site including the optical line amplifier $13^4$. In preferred embodiments, the optical phase conjugation device 15, the optical fiber length 16 and the further optical amplifier 19 may be included together in a single enclosure 20.

Advantageously, the length $L_N$ the optical fiber length 16 is lower than the effective length $L_{eff}$ of transmission optical fiber. Thus, a very reduced length is added. In particular, the length $L_N$ can be calculated using the equation:

$$D_N L_N = D L_{eff} \qquad [16]$$

where $D_N$ and $D$ are the dispersion coefficient of the optical fiber length 16 and the dispersion coefficient of the transmission fiber, respectively. For the calculation of the effective length, equations [8], [9], [10], [10'] may be used, depending on the amplification used (lumped and/or distributed). Preferably, the absolute value of the dispersion coefficient of the optical fiber length is at least two times the dispersion coefficient of the transmission optical fiber, more preferably at least three times. For example, the optical fiber length may be made of dispersion compensating fiber, or of a fiber suitable for transmission of optical signals having a higher dispersion coefficient than the dispersion coefficient of the transmission fiber included in the spans, in absolute value.

The purpose of the further optical amplifier 19 is to provide a sufficient level of optical power within the optical fiber length 16, in order to facilitate the occurrence of nonlinear effects therein. More particularly, the output power $P_N$ of the further optical amplifier 19 can be calculated with the following formula, in case of lumped amplification:

$$P_N = P_0 \frac{\gamma}{\gamma_N} \frac{1 - e^{-\alpha L}}{1 - e^{-\alpha_N L_N}} \qquad [17]$$

where $P_0$ is the average output power of the optical line amplifiers $13^1 ... 13^M$, $\gamma$ and $\alpha$ are, respectively, the nonlinear coefficient and the attenuation coefficient of the transmission optical fiber, $\gamma_N$ and $\alpha_N$ are, respectively, the nonlinear coefficient and the attenuation coefficient of the optical fiber length 16. In practice, after calculation of the length of the added optical fiber length 16 (using eq.[16]), eq.[17] can be used as rough guide for setting the output power of the further amplifier 19. However, a fine tuning of the output power of the further amplifier 19 may be provided around a value given by eq.[17], in order to obtain a low penalty at the receiving station 11b.

The Applicant has found that the provision of the OPC 15, in combination with the optical fiber length 16 and the further optical amplifier 19, according to the above, allows to reduce the impact of nonlinearity in an optical system. According to the Applicant, this may depend on the fact that a better symmetric disposition of the high power regions with respect to the accumulated dispersion is obtained when adding the OPC, the optical fiber length and the further amplifier according to what stated above. According to the Applicant, beneficial results can be obtained both in case of use of lumped optical line amplifiers and in case of use of distributed amplification along the optical line (alternatively or in combination with lumped amplification).

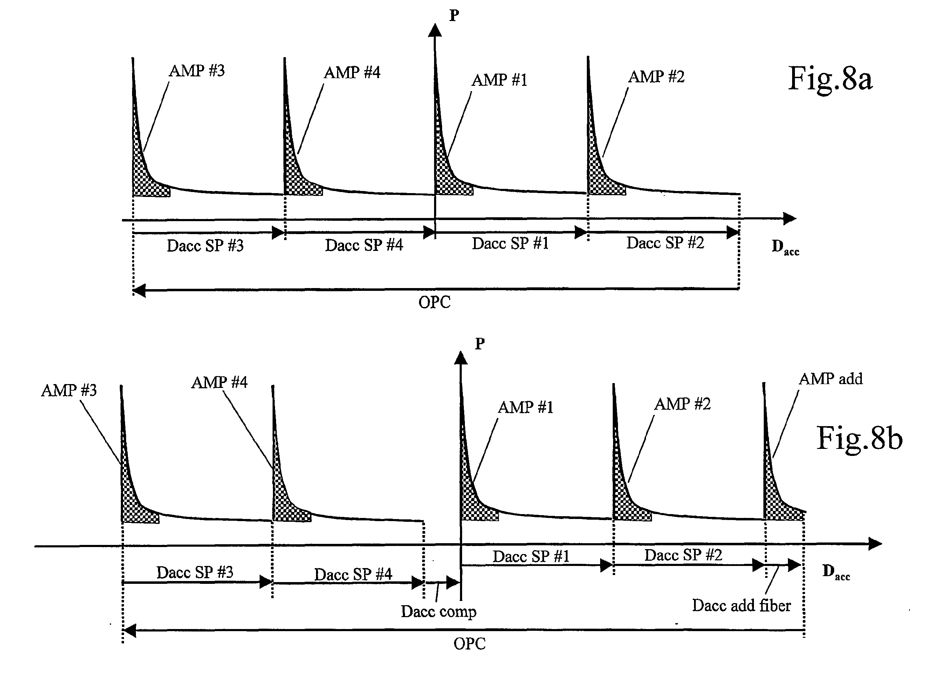

Fig.8a and fig.8b schematically show plots of the optical power of an optical signal which can be obtained by propagating the same along an optical line comprising four spans of optical fiber and four lumped line amplifiers, versus the dispersion accumulated by the same optical signal. In both figures, it is supposed that an OPC device is placed before the third amplifier. In fig.8a, it is supposed that no optical fiber length and no further optical amplifier are present upstream from the OPC device, whereas in fig.8b it is supposed that the further amplifier and the optical fiber length are disposed between the end of the second span and the OPC device. The optical fiber length introduces an additional accumulated dispersion equal to the dispersion accumulated in a portion of span having a length $L_{eff}$. Furthermore, it is assumed, for simplicity, that the output power of the further optical amplifier is equal to the average output power of the optical line amplifiers. In both figures, high power regions having a length $L_{eff}$ are highlighted.

Considering fig.8a first, at the input of the system the dispersion accumulated by an optical signal is zero (or at a predetermined value if pre-chirp is used) and the first line amplifier (AMP#1) sets the optical power of the optical signal to a predetermined high level. During travel on the first span the signal accumulates an amount of dispersion (Dacc SP #1), in dependence on the dispersion coefficient of the transmission fiber used, while at the same time the optical power diminishes due to fiber attenuation. At the end of the first span the optical signal is amplified by the second amplifier (AMP #2), that substantially brings the optical power up to the same level set by AMP #1. During travel on the second span, the signal continues to accumulate dispersion (Dacc SP #2), while the power diminishes, up to the OPC device. The OPC device performs optical phase conjugation, so that the accumulated dispersion at the end of the second span is folded on the opposite side of the graph, substantially at a symmetric position. At the output of the OPC device, the phase conjugated optical signal is amplified by the third amplifier (AMP #3), that substantially brings the optical power up to the same level set by AMP #1 and/or AMP #2. During travel on the third span, the phase conjugated signal reduces its accumulated dispersion (Dacc SP #3), in absolute value, while the power diminishes. Then the phase conjugated optical signal is amplified by the fourth amplifier (AMP #4) and transmitted to the fourth span, where it reduces its accumulated dispersion down to substantially zero at the end of the system. As it can be seen in fig.8a, the highlighted high power regions are not symmetric with respect to the zero value of accumulated dispersion.

In the case shown in fig.8b, in the first two spans the system behaves in the same way as for the case shown in fig.8a. However, this time, at the end of the second span the further amplifier (AMP add) brings the optical power up to the same level set by AMP #1 and/or AMP #2 and the added optical fiber length introduces an extra accumulated dispersion (Dacc add fiber) substantially equal to the dispersion accumulated in an effective length of transmission fiber. Then the OPC device performs phase conjugation on the optical signal, changing the sign of accumulated dispersion close to the third amplifier (AMP #3). During travel on the third span, the phase conjugated signal reduces its accumulated dispersion (Dacc SP #3), in absolute value, while the power diminishes. Then the phase conjugated optical signal is amplified by the fourth amplifier (AMP #4) and transmitted to the fourth span, where it further reduces its accumulated dispersion. After the fourth span, a dispersion compensator can compensate the residual accumulated dispersion (Dacc comp) that was introduced by the added optical fiber length. As it can be seen in fig.8b, the high-power regions which are far from the zero point of accumulated dispersion are disposed substantially symmetrically with each other. According to the results obtained by the Applicant, this is of benefit for reducing nonlinearity.

Preferably, the OPC device is disposed in proximity of the mid-span optical line amplifier. If the optical system has N spans between its input and its output, the mid-span optical line amplifier is the $[N/2+1]^{th}$ (to be understood as the integer part of N/2+1) optical line amplifier, starting the counting of the optical amplifiers from the input of the optical fiber path. This particular positioning is preferred in that it allows at the same time to reduce in a very effective manner the effects of nonlinearities and to compensate chromatic dispersion to a great extent, except for the residual chromatic dispersion introduced by the addition of the optical fiber length, that may be compensated separately, for example at the end of the optical fiber path. Further, the reduction of the effects of nonlinearities may be very effective with a positioning near the mid-span, as in this case the high-power regions will be disposed substantially symmetrically with respect to the OPC. However, the Applicant believes that positive effects in the reduction of the impact of nonlinearity may be obtained by positioning the OPC near an optical line amplifier disposed within a mid-span portion of the optical fiber path of $\pm L/5$, preferably $\pm L/6$, around the mid-span point of the optical fiber path, wherein L is the overall length of the optical fiber path. Anyway, it has to remembered that if the positioning of the OPC device is made away from the mid-span optical line amplifier, then a substantial amount of chromatic dispersion not compensated by the OPC device needs to be compensated. This may be done once at the end of the optical fiber path, preferably with one or more compensating gratings, or more gradually along the optical fiber path with suitable compensating devices, for example included in at least some optical amplifier, provided that the symmetry in the distribution of the high power regions along the optical path of the system with respect to accumulated dispersion is preserved.

## Example 1

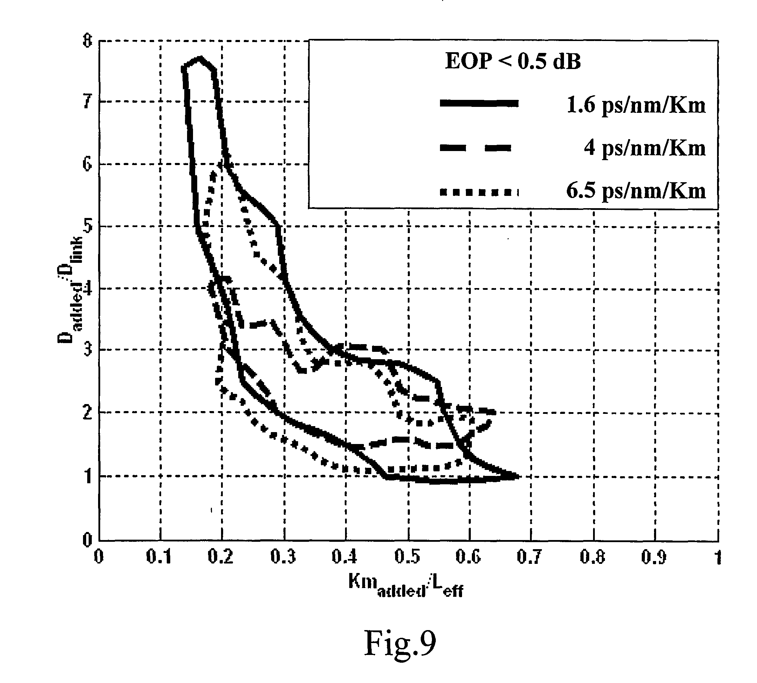

In a first series of simulations, the Applicant has evaluated the performance of an optical line having six spans having a length of 100 km and using only lumped amplification. A NRZ signal modulated at a bit rate of 40 Gbit/s was considered for the evaluation. An optical phase conjugator, an optical fiber length and a further amplifier were added at the end of the third span, according to the invention. The nonlinear coefficient of both the transmission fiber and the added optical fiber length was 1.3 $W^{-1}$ $km^{-1}$, the attenuation coefficient of both the transmission fiber and the added optical fiber length was 0.25 dB/km. The output power of the lumped amplifiers disposed along the line was 10 dBm, whereas the output power of the further amplifier was 13 dBm. Three different dispersion coefficients were considered for the transmission fiber comprised in the spans in three different simulations, namely: +1.6 ps/nm/km, +4.0 ps/nm/km, +6.5 ps/nm/km. The noise introduced by the lumped amplifiers was neglected. Fig.9 shows the result of the three simulations. The points included within the three curves of fig.9 identify the pairs length/dispersion coefficient of the added optical fiber length leading to an eye-opening-penalty (EOP) at the end of the optical path of not more than 0.5 dB. The values of length and the dispersion coefficient of the added fiber are normalized versus the effective length and the dispersion coefficient of the transmission fiber, respectively. As it can be seen, in order to obtain low penalties the added fiber should have dispersion coefficient higher than the dispersion coefficient of the transmission fiber and, correspondingly, lower length (following eq.[16]). For example, a SMF fiber having a dispersion of +16 ps/nm/km could be used as additional fiber length with an OPC and an additional amplifier in a system having a transmission fiber with dispersion +4 ps/nm/km. The length of the additional fiber could be ¼ of the effective length of the transmission fiber. Advantageously, a wide tolerance is permitted in terms of the dispersion coefficient of the added optical fiber length. In particular, the tolerance of the dispersion coefficient may be of great importance with regards to implementation in a WDM optical system. According to the Applicant, similar curves can be obtained by setting to 10 dBm also the output power of the further optical amplifier and by considering a nonlinear coefficient of the added fiber doubled with respect to that of the transmission fiber, following eq.[17]. On the other hand, the curves may shift towards higher values of dispersion coefficient (and, correspondingly, lower lengths) by setting higher output power of the further amplifier, the other parameters being equal.

**Example 2**

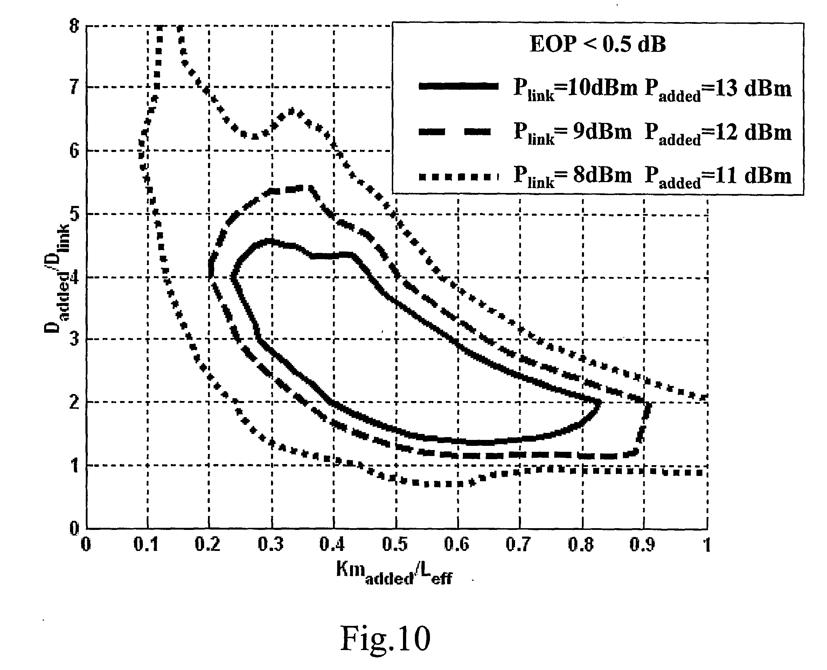

In a second series of simulations, the Applicant has evaluated the performance of an optical line having the same characteristics described with reference to example 1: however, in the second series of simulations the output power of the lumped amplifiers was varied, while the dispersion coefficient of the transmission fiber was set to -4 ps/nm/km. The power of the further amplifier added with the optical fiber length and the OPC was maintained higher by 3 dB with respect to the output power of the lumped amplifiers. Three different values of output power of the lumped amplifiers were considered in three different simulations, namely: 8 dBm, 9 dBm, 10 dBm. Correspondingly, the values of output power set in the three simulations for the further amplifier were 11 dBm, 12 dBm, 13 dBm. The noise introduced by the lumped amplifiers was neglected. Fig.10 shows the result of the three simulations. The points included within the three curves of fig.10 identify the pairs length/dispersion coefficient of the added optical fiber length leading to an eye-opening-penalty (EOP) at the end of the optical path of less than or equal to 0.5 dB. The values of length and the dispersion coefficient of the added fiber are normalized versus the effective length and the dispersion coefficient of the transmission fiber, respectively. As it can be seen, the lower the output power of the amplifiers, the wider the curves. According to the Applicant, this may depend on the fact that nonlinear effects have a higher incidence when the optical power within the optical line is higher.

**Example 3**

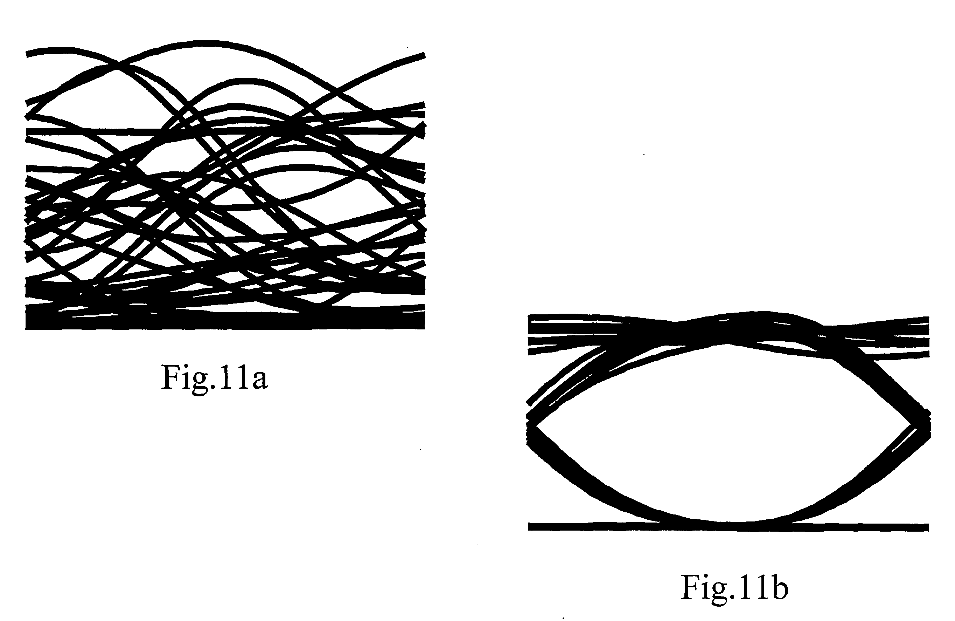

Figs.11a-11b show the eye diagrams obtained by simulations at the receiving end of an optical system having five spans separated by lumped amplifiers providing an input power in each span of 10 dBm, with a transmission fiber having a dispersion coefficient of +4 ps/nm/km, attenuation of 0.25 dB/km and nonlinear coefficient of 1.3 W$^{-1}$ km$^{-1}$. More particularly, fig.11a shows the eye opening of the above system not including an OPC but including a compensator for chromatic dispersion, whereas fig.11 b shows the eye opening of the above optical system in which an OPC, an optical fiber being $L_{eff}$/4 long and having a dispersion coefficient of 16 ps/nm/km, and a further optical amplifier providing an optical power of 14.5 dBm at the input of the optical fiber length, were added at the end of the third span, according to the invention. The propagation of a NRZ signal modulated at 40 Gbit/s was simulated. As it can be seen by fig.11a, the nonlinearity disrupts the signal at the receiving end of the optical system, whereas fig.11b shows an obtained eye almost completely opened.

**Example 4**

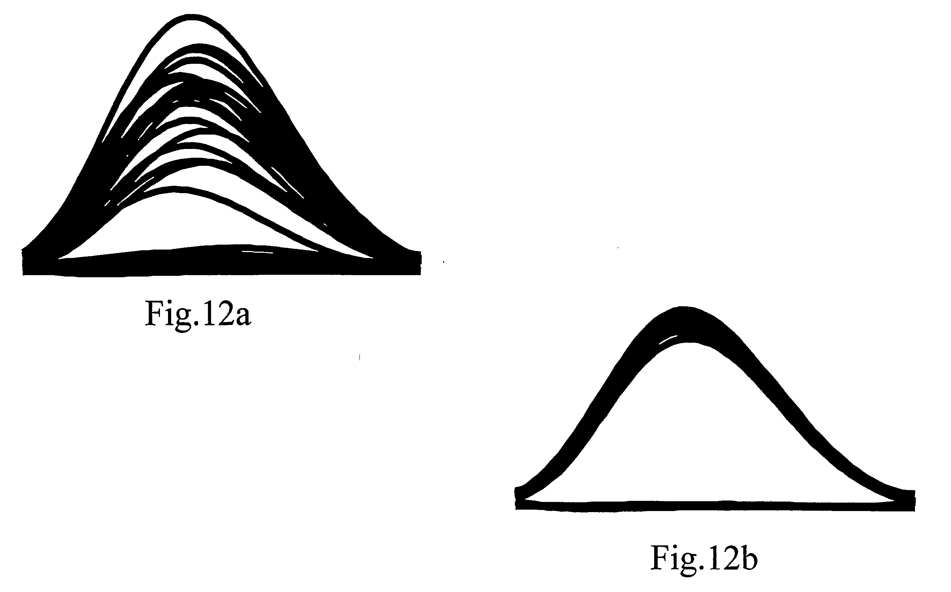

Figs. 12a-12b show the eye diagrams obtained by simulations at the receiving end of the same optical systems described with reference to example 3, with RZ pulses in place of NRZ pulses. The RZ pulses had gaussian shape with a full width at half maximum $T_{FWHM}$ of 5 ps. Fig.12a shows the eye opening obtained at the receiving end of the system not including the OPC, whereas fig.12b shows the eye opening obtained at the receiving end of the system including the OPC, the added fiber and the further amplifier. As it can be seen, an obtained eye almost completely opened is shown in fig.12b.

**Example 5 (comparison)**

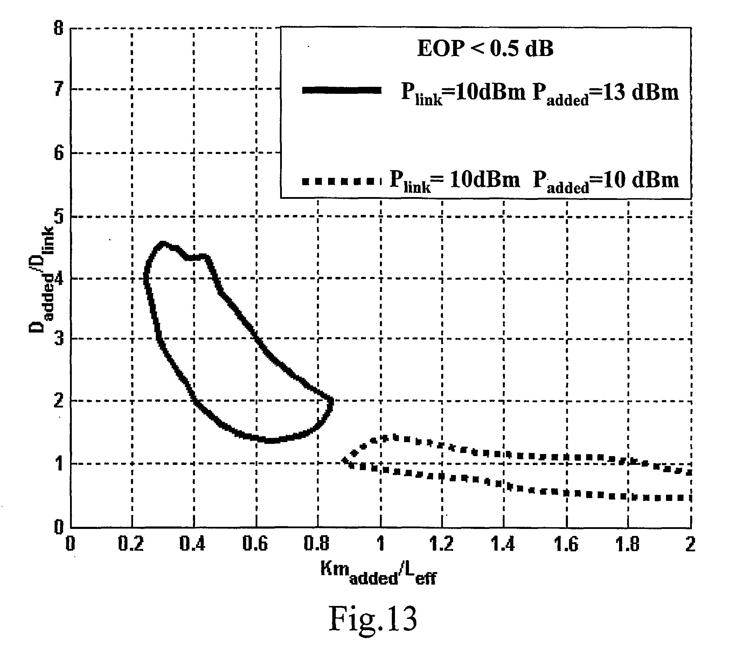

In a third series of simulations, the Applicant has evaluated the performance of an optical line having the same characteristics described with reference to example 2: however, in this series of simulations the further amplifier provided an optical power at the input of the optical fiber length equal to the output power of the line amplifiers (10 dBm). The transmission fiber had a dispersion coefficient of -4 ps/nm/km at the signal wavelength. The nonlinear coefficient and the attenuation of the added optical fiber length were equal to the corresponding parameters of the transmission fiber (1.3 W$^{-1}$ km$^{-1}$ and 0.25 dB/km, respectively). The dashed line plotted in fig.13 identifies the pairs length/dispersion coefficient of the added optical fiber length lending to a maximum eye-opening-penalty (EOP) at the end of the optical path of 0.5 dB. As it can be seen, the points included within the dashed line of fig.13 correspond to a dispersion coefficient substantially equal to that of the transmission fiber and, correspondingly, to a length higher than or equal to the effective length of the transmission fiber. A configuration having an added effective length of optical fiber equal to the transmission fiber (corresponding to point 1:1 in the graph of fig.13) is for example disclosed in the above cited WO patent application no. 99/05805. However, it has to be noticed that the region enclosed by the dashed line in fig.13 is very thin, so that variations of the dispersion coefficient of the added fiber length (for example due to the use of multiple wavelengths in a WDM system) may be hardly tolerated. On the contrary, the continuous line in fig.13, corresponding to one of the cases described with reference to example 2 (see continuous line of fig.10) and reported for comparison purposes in fig.13, shows a higher tolerance allowed by embodiments according to the present invention.

The system according to the invention has been explained with reference to an optical fiber path included between a transmitting station and a receiving station. This has not to be considered as limiting the invention, as an optical line including an optical fiber path according to what stated above may be disposed in a more complex network between any two nodes the network itself, for example two nodes of an optical network not having transmitting and/or receiving function, but only routing function.

The system or the optical line according to the invention may be implemented *ex-novo,* by connecting at least the various components described with reference to fig.1 and fig.7 preferably providing that the optical fiber length 16, the further amplifier 19 and the OPC device 15 be included in the same amplification site of the associated line amplifier. Less preferably, the optical fiber length 16, the further amplifier 19 and the OPC device 15 may be included in a separate site.

The system or the optical line according to the invention may further be an upgrade of an already installed system. In such case, it may be possible to provide the optical fiber length 16, the further amplifier 19 and the OPC device 15 arranged according to the invention, so as to include them in the same amplification site of the associated line amplifier. Less preferably, the optical fiber length 16, the further amplifier 19 and the OPC device 15 may be included in a separate site.

## Claims

1. An optical system (10) comprising:

   - an optical fiber path (12) suitable for propagating an optical signal at least in a first direction;
   - a plurality M of optical line amplifiers (13$^1$...13$^6$), disposed along said optical fiber path (12), so as to divide said optical fiber path in N spans of optical fiber (14$^1$...14$^5$), said spans of optical fiber comprising at least one transmission optical fiber having an effective length $L_{eff}$ and
   - an optical phase conjugation device (15) associated to an amplifier of said plurality of amplifiers;
   - an optical fiber length (16) disposed upstream from said optical phase conjugation device (15);
   - a further optical amplifier (19) associated to said optical fiber length (16);

   **characterized in that**

   - said optical fiber length (16) has the same sign of dispersion of said transmission optical fiber and a higher dispersion coefficient, in absolute value, at a wavelength of said optical signal, and
   - said optical fiber length (16) is adapted for introducing an accumulated dispersion comprised between 0.6 and 1.5 times a dispersion accumulated in an effective length $L_{eff}$ of said transmission optical fiber.

2. An optical system according to claim 1, **characterized in that** said optical fiber length (16) has an absolute value of dispersion coefficient higher than or equal to two times the dispersion coefficient of said transmission optical fiber.

3. An optical system according to claim 2, **characterized in that** said optical fiber length (16) has an absolute value of dispersion coefficient higher than or equal to three times the dispersion coefficient of said transmission optical fiber.

4. An optical system according to any one of the previous claims, **characterized in that** said optical line amplifiers (13$^1$...13$^6$) comprise erbium-doped fiber amplifiers.

**5.** An optical system according to any one of the previous claims, **characterized in that** said further optical amplifier (19) provides an output power higher than an average output power of said plurality of line amplifiers ($13^1...13^6$).

**6.** An optical system according to any one of the previous claims, **characterized in that** said optical fiber length (16) has a nonlinear coefficient higher than a nonlinear coefficient of said transmission optical fiber.

**7.** An optical system according to any one of the previous claims, **characterized in that** said optical fiber length (16) is adapted for introducing an accumulated dispersion higher than or equal to 0.8 times the dispersion accumulated in an effective length $L_{eff}$ of said transmission optical fiber.

**8.** An optical system according to any one of the previous claims, **characterized in that** said optical fiber length (16) is adapted for introducing an accumulated dispersion lower than or equal to 1.2 times the dispersion accumulated in an effective length $L_{eff}$ of said transmission optical fiber.

**9.** An optical system according to any one of the previous claims, **characterized in that** said transmission optical fiber has a dispersion higher than or equal to 0.5 ps/nm/km, in absolute value, at the signal wavelength.

**10.** An optical system according to any one of the previous claims comprising a transmitting station (11a), a receiving station (11b), said transmitting station (11a) being connected at an input end and said receiving station (11b) being connected to an output end of said optical fiber path (12).

**11.** A method for assembling an optical system (10) suitable for propagating an optical signal, comprising the steps of:

- providing a plurality M of optical line amplifiers ($13^1....13^6$);
- connecting said plurality of optical line amplifiers ($13^1....13^6$) by N spans of optical fiber ($14^1....14^5$) so as to form an optical fiber path (12), said spans of optical fiber ($14^1....14^5$) comprising at least one transmission optical fiber having an effective length $L_{eff}$;
- associating a phase conjugation device (15) to one of said optical line amplifiers;
- connecting an optical fiber length (16) upstream from said optical phase conjugation device (15);
- associating a further optical amplifier (19) to said optical fiber length (16);

**characterized in that**

- said optical fiber length has the same sign of dispersion of said transmission optical fiber and a higher dispersion coefficient, in absolute value, at a wavelength of said optical signal; and
- said optical fiber length is adapted for introducing an accumulated dispersion comprised between 0.6 and 1.5 times a dispersion accumulated in an effective length $L_{eff}$ of said transmission optical fiber.

**Patentansprüche**

**1.** Optisches System (10), umfassend:

- einen faseroptischen Weg (12), der zur Ausbreitung eines optischen Signals mindestens in einer ersten Richtung geeignet ist;
- eine Vielzahl M optischer Leitungsverstärker ($13^1...13^6$), die entlang des faseroptischen Wegs (12) angeordnet sind, um so den faseroptischen Weg in N Spannen optischer Fasern ($14^1...14^5$) zu unterteilen, wobei die Spannen optischer Faser mindestens eine optische Übertragungsfaser mit einer effektiven Länge $L_{eff}$ umfassen, und
- eine optische Phasenkonjugationsvorrichtung (15), die mit einem Verstärker der Vielzahl von Verstärkern verbunden ist;
- eine optische Faserlänge (16), die stomaufwärts von der optischen Phasenkonjugationsvorrichtung (15) angeordnet ist;
- einen weiteren optischen Verstärker (19), der mit der optischen Faserlänge (16) verbunden ist;

**dadurch gekennzeichnet, dass**

- die optische Faserlänge (16) dasselbe Dispersionsvorzeichen der optischen Übertragungsfaser sowie einen im Absolutwert höheren Dispersionskoeffizienten an einer Wellenlänge des optischen Signals besitzt, und
- die optische Faserlänge (16) geeignet ist, um eine angesammelte Dispersion zwischen dem 0,6- und 1,5-fachen einer in einer effektiven Länge $L_{eff}$ angesammelten Dispersion der optischen Übertragungsfaser einzuführen.

2. Optisches System nach Anspruch 1, **dadurch gekennzeichnet, dass** die optische Faserlänge (16) einen Absolutwert des Dispersionskoeffizienten besitzt, der größer oder gleich dem zweifachen des Dispersionskoeffizienten der optischen Übertragungsfaser ist.

3. Optisches System nach Anspruch 1, **dadurch gekennzeichnet, dass** die optische Faserlänge (16) einen Absolutwert des Dispersionskoeffizienten besitzt, der größer oder gleich dem dreifachen des Dispersionskoeffizienten der optischen Übertragungsfaser ist.

4. Optisches System nach einem der vorangehenden Ansprüche, **dadurch gekennzeichnet, dass** die optischen Leitungsverstärker ($13^1$...$13^6$) erbiumdotierte Faserverstärker umfassen.

5. Optisches System nach einem der vorangehenden Ansprüche, **dadurch gekennzeichnet, dass** der weitere optische Verstärker (19) eine Ausgangsleistung bereitstellt, die höher als eine durchschnittliche Ausgangsleistung der Vielzahl der Leistungsverstärker ($13^1$...$13^6$) ist.

6. Optisches System nach einem der vorangehenden Ansprüche, **dadurch gekennzeichnet, dass** die Faserlänge (16) einen nichtlinearen Koeffizienten besitzt, der größer als ein nichtlinearer Koeffizient der optischen Übertragungsfaser ist.

7. Optisches System nach einem der vorangehenden Ansprüche, **dadurch gekennzeichnet, dass** die optische Faserlänge (16) geeignet ist, um eine angesammelte Dispersion größer oder gleich dem 0,8-fachen der in einer effektiven Länge $L_{eff}$ der optischen Übertragungsfaser angesammelten Dispersion einzuführen.

8. Optisches System nach einem der vorangehenden Ansprüche, **dadurch gekennzeichnet, dass** die optische Faserlänge (16) geeignet ist, um eine angesammelte Dispersion kleiner oder gleich dem 1,2-fachen der in einer effektiven Länge $L_{eff}$ der optischen Übertragungsfaser angesammelten Dispersion einzuführen.

9. Optisches System nach einem der vorangehenden Ansprüche, **dadurch gekennzeichnet, dass** die optische Übertragungsfaser eine Dispersion besitzt, die an der Signalwellenlänge im Absolutwert größer oder gleich 0,5 ps/nm/km ist.

10. Optisches System nach einem der vorangehenden Ansprüche, **dadurch gekennzeichnet**, umfassend eine Übertragungsstation (11a), eine Empfangsstation (11b), wobei die Übertragungsstation (11a) mit einem Eingangsende und die Empfangsstation (11b) mit einem Ausgangsende des faseroptischen Wegs (12) verbunden ist.

11. Verfahren zum Zusammenbau eines optischen Systems (10), das zur Ausbreitung eines optischen Signals geeignet ist, umfassend die folgenden Schritte:

   - Bereitstellen einer Vielzahl M optischer Leitungsverstärker ($13^1$...$13^6$);
   - Verbinden der Vielzahl optischer Leitungsverstärker ($13^1$...$13^6$) mit N Spannen optischer Faser ($14^1$...$14^5$), um einen faseroptischen Weg (12) zu bilden, wobei die Spannen optischer Faser ($14^1$...$14^5$) mindestens eine optische Übertragungsfaser mit einer effektiven Länge $L_{eff}$ umfassen;
   - Verbinden einer Phasenkonjugationsvorrichtung (15) mit einem der optischen Leitungsverstärker;
   - Verbinden einer optischen Faserlänge (16) stromaufwärts von der optischen Phasenkonjugationsvorrichtung (15);
   - Verbinden eines weiteren optischen Verstärkers (19) mit der optischen Faserlänge (16);

   **dadurch gekennzeichnet, dass**

   - die optische Faserlänge dasselbe Dispersionsvorzeichen der optischen Übertragungsfaser und einen im Absolutwert höheren Dispersionskoeffizienten an einer Wellenlänge des optischen Signals besitzt; und
   - die optische Faserlänge geeignet ist, um eine angesammelte Dispersion zwischen dem 0,6- und 1,5-fachen einer in einer effektiven Länge $L_{eff}$ der optischen Übertragungsfaser angesammelten Dispersion einzuführen.

**Revendications**

1. Système optique (10) comprenant :

   - un chemin de fibre optique (12) apte à propager un signal optique au moins dans une première direction ;
   - une pluralité de M amplificateurs de ligne optique ($13^1$ ...$13^6$), disposés le long dudit chemin de fibre optique (12) de façon à diviser ledit chemin de fibre optique en N tronçons de fibre optique ($14^1$ ...$14^5$), lesdits tronçons de fibre optique comprenant au moins une fibre optique de transmission ayant une longueur utile $L_{eff}$, et
   - un dispositif de conjugaison de phase optique (15) associé à un amplificateur de ladite pluralité d'amplificateurs ;
   - une longueur de fibre optique (16) disposée en amont dudit dispositif de conjugaison de phase optique (15);
   - un autre amplificateur optique (19) associé à ladite longueur de fibre optique (16);

   **caractérisé en ce que**

   - ladite longueur de fibre optique (16) a le même signe de dispersion que ladite fibre optique de transmission et un coefficient de dispersion supérieur, en valeur absolue, à une longueur d'onde dudit signal optique, et
   - ladite longueur de fibre optique (16) est apte à introduire une dispersion accumulée comprise entre 0,6 et 1,5 fois une dispersion accumulée dans une longueur utile $L_{eff}$ de ladite fibre optique de transmission.

2. Système optique selon la revendication 1, **caractérisé en ce que** ladite longueur de fibre optique (16) a une valeur absolue de coefficient de dispersion supérieure ou égale à deux fois le coefficient de dispersion de ladite fibre optique de transmission.

3. Système optique selon la revendication 2, **caractérisé en ce que** ladite longueur de fibre optique (16) a une valeur absolue de coefficient de dispersion supérieure ou égale à trois fois le coefficient de dispersion de ladite fibre optique de transmission.

4. Système optique selon l'une quelconque des revendications précédentes, **caractérisé en ce que** lesdits amplificateurs de ligne optique ($13^1$ ...$13^6$) sont constitués d'amplificateurs à fibre dopée à l'erbium.

5. Système optique selon l'une quelconque des revendications précédentes, **caractérisé en ce que** ledit autre amplificateur optique (19) délivre une puissance de sortie supérieure à la puissance de sortie moyenne de ladite pluralité d'amplificateurs de ligne ($13^1$ ...$13^6$).

6. Système optique selon l'une quelconque des revendications précédentes, **caractérisé en ce que** ladite longueur de fibre optique (16) a un coefficient non linéaire supérieur à un coefficient non linéaire de ladite fibre optique de transmission.

7. Système optique selon l'une quelconque des revendications précédentes, **caractérisé en ce que** ladite longueur de fibre optique (16) est apte à introduire une dispersion accumulée supérieure ou égale à 0,8 fois la dispersion accumulée dans une longueur utile $L_{eff}$ de ladite fibre optique de transmission.

8. Système optique selon l'une quelconque des revendications précédentes, **caractérisé en ce que** ladite longueur de fibre optique (16) est apte à introduire une dispersion accumulée inférieure ou égale à 1,2 fois la dispersion accumulée dans une longueur utile $L_{eff}$ de ladite fibre optique de transmission.

9. Système optique selon l'une quelconque des revendications précédentes, **caractérisé en ce que** ladite fibre optique de transmission a une dispersion supérieure ou égale à 0,5 ps/nm/km, en valeur absolue, à la longueur d'onde du signal.

10. Système optique selon l'une quelconque des revendications précédentes, comprenant une station d'émission (11a), une station de réception (11b), ladite station d'émission (11a) étant connectée à une extrémité d'entrée et ladite station de réception (11b) étant connectée à une extrémité de sortie dudit chemin de fibre optique (12).

11. Procédé pour assembler un système optique (10) apte à propager un signal optique, comprenant les étapes consistant à :

   - fournir une pluralité de M amplificateurs de ligne optique ($13^1$ ...$13^6$) ;

- connecter ladite pluralité d'amplificateurs de ligne optique ($13^1$ ...$13^6$) par N tronçons de fibre optique ($14^1$ ... $14^5$), de façon à former un chemin de fibre optique (12), lesdits tronçons de fibre optique ($14^1$ ...$14^5$) comprenant au moins une fibre optique de transmission ayant une longueur utile $L_{eff}$;
- associer un dispositif de conjugaison de phase (15) à l'un desdits d'amplificateurs de ligne optique ;
- connecter une longueur de fibre optique (16) en amont dudit dispositif de conjugaison de phase optique (15) ;
- associer un autre amplificateur optique (19) à ladite longueur de fibre optique (16) ;

**caractérisé en ce que**

- ladite longueur de fibre optique a le même signe de dispersion que ladite fibre optique de transmission et un coefficient de dispersion supérieur, en valeur absolue, à une longueur d'onde dudit signal optique, et
- ladite longueur de fibre optique est apte à introduire une dispersion accumulée comprise entre 0,6 et 1,5 fois une dispersion accumulée dans une longueur utile $L_{eff}$ de ladite fibre optique de transmission.

Fig.1

Fig.2a

Fig.2b

Fig.3a

Fig.3b

Fig.4

## Fig.5a

## Fig.5b

25

Fig.6a

Lspan=50km  K=1

z [km]

a.u.

Fig.6b

Lspan=70km  K=0.5

z [km]

a.u.

Fig.7

Fig.8a

Fig.8b

Fig.9

EP 1 576 747 B1

Fig.10

EP 1 576 747 B1

Fig.11b

Fig.11a

Fig.12b

Fig.12a

Fig.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6175435 B
- FR 2757720, Alcatel Alsthom
- WO 9905805 A

- EP 987583 A
- US 5365362 A

**Non-patent literature cited in the description**

- **G.P. AGRAWAL.** Fiber-Optic Communication Systems. A Wiley Interscience Publication, 1997
- **C. LORATTANASANE et al.** Design Theory of Long-Distance Optical Transmission Systems Using Midway Optical Phase Conjugation. *Journal of Lightwave Technology,* 1997, vol. 15 (6), 948-955
- **G.P. AGRAWAL.** Nonlinear Fiber Optics. Academic Press Inc, 1995, 317-319

- **T. TSUZAKI et al.** Broadband Discrete Fiber Raman Amplifier with High Differential Gain Operating Over 1.65 $\mu$m-band. *OFC2001,* vol. MA3-1
- **C.R. GILES ; V. MIZRAHI ; T. ERDOGAN.** Polarization-Independent Phase Conjugation in a Reflective Optical Mixer. *IEEE Photonics Technology Letters,* 1995, vol. 7 (1), 126-8